# EUROPÄISCHE PATENTANMELDUNG

(11) **EP 1 353 515 A1**
(43) Veröffentlichungstag der Anmeldung: **15.10.2003**
(21) Anmeldenummer: 02008410.9
(22) Anmeldetag: 12.04.2002
(51) Int. Cl.: H04N 9/28

(54) **Farbbildröhre und Ablenksystem für Farbbildröhren mit verbesserter Konvergenz**

(71) Anmelder: Matsushita Display Devices (Germany) GmbH, 73730 Esslingen (DE)
(72) Erfinder: Ehrhardt, Andreas, Dr., 73207 Plochingen (DE)
(74) Vertreter: Grünecker, Kinkeldey, Stockmair & Schwanhäusser Anwaltssozietät

(57) **Zusammenfassung**

Die Erfindung betrifft somit eine Farbbildröhre und ein Ablenksystem für eine Farbbildröhre mit einem rechteckigen Leuchtschirm und einem Inline-Elektronenstrahlerzeugungssystem. Ein Inline-Elektronenstrahlerzeugungssystem erzeugt mehrere im wesentlichen in einer gemeinsamen Ebene verlaufende Elektronenstrahlen, die auf den Leuchtschirm gerichtet sind. Um eine vertikale Gründurchbiegung in den Ecken des Leuchtschirms zu korrigieren, werden auf der Farbbildröhre bzw. in dem Ablenksystem einer Farbbildröhre Korrekturmagnete angeordnet. Die Korrekturmagnete befinden sich im wesentlichen in einer Ebene senkrecht zur Richtung der Elektronenstrahlen. Innerhalb dieser Ebene sind die Korrekturmagnete unter einem Winkel zur gemeinsamen Ebene, in der die Elektronenstrahlen verlaufen, angeordnet, der zwischen 20° und 70° liegt. Die vorliegende Erfindung ermöglicht damit eine Farbbildröhre, bei der eine herkömmliche vertikale Gründurchbiegung ohne großen Zusatzaufwand korrigierbar ist und die trotz verbesserter Abbildungseigenschaften günstig herstellbar ist.

## Beschreibung

Die Erfindung betrifft allgemein eine Farbbildröhre und insbesondere Farbbildröhren, die eine verbesserte Ablenkeinheit für geringere Abbildungsfelder aufweisen.

Die Ablenkung von Elektronenstrahlen in einer Farbbildröhre erfolgt durch magnetische Felder, die von horizontalen und vertikalen Ablenkspulen einer Ablenkeinheit erzeugt werden. Die Ablenkeinheit, die auf einer Farbbildröhre montiert ist, besteht im wesentlichen aus zwei Spulenpaaren und einem Ferritkern. Ein erstes Spulenpaar erzeugt ein Magnetfeld, das die von Elektronenstrahlerzeugungssystemen erzeugten Elektronenstrahlen in horizontaler Richtung (X-Richtung) ablenkt, während das weitere Spulenpaar eine vertikale Ablenkung (Y-Richtung) bewirkt. Der Ferritkern umschließt beide Spulenpaare und dient der Rückführung des magnetischen Flusses.

Moderne Farbbildröhren weisen Elektronenstrahlerzeugungssysteme in einer sogenannten Inline-Anordnung auf, bei der die Elektronenstrahlerzeugungssysteme für die verschiedenen Farbkomponenten in einer Ebene nebeneinander angeordnet sind. Die Achsen der in solchen Systemen erzeugten Elektronenstrahlen verlaufen koplanar und konvergieren auf dem Bildschirm.

Damit die drei Elektronenstrahlen jeweils die ihnen zugeordneten Leuchtpunkte treffen, müssen sie jeweils in einem Punkt vor der Schattenmaske konvergieren. Im allgemeinen wirkt aufgrund der inhomogenen Felder auf den mittleren Elektronenstrahl nicht dieselbe Ablenkkraft, wie auf die beiden seitlichen Elektronenstrahlen. Die unterschiedliche Ablenkung der einzelnen Elektronenstrahlen dient u. a. der Reduzierung von Konvergenzfehlem, die aber nicht immer vollständig beseitigt werden können, so dass die drei Elektronenstrahlen in diesen Fällen nicht in einem Punkt vor der Schattenmaske konvergieren.

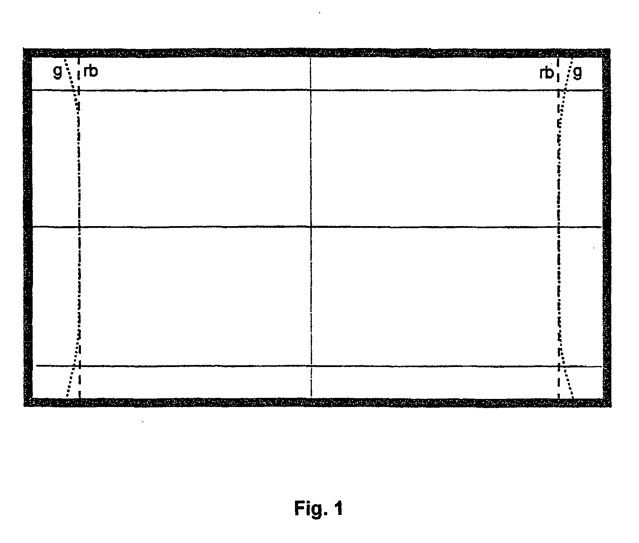

Besonders schwierig ist es, im Randbereich des Schirms eine nach außen gerichtete "Durchbiegung" der vertikalen Linie der grünen Farbkomponente (mittlerer Elektronenstrahl) relativ zu der roten und blauen Farbkomponente (seitliche Elektronenstrahlen) zu korrigieren. Dieser Konvergenzfehler ist für einen rechteckigen Leuchtschirm in Fig. 1 schematisch dargestellt. Während sich die Auftreffpunkte der roten und blauen Farbkomponenten (r, b) jeweils vollständig haben korrigieren lassen, verbleibt ein Fehler der grünen Farbkomponente (g) in den Randbereichen des Leuchtschirms.

Aufgabe der Erfindung ist es, eine Farbbildröhre und ein Ablenksystem mit verbesserter Farbkonvergenz anzugeben.

Dies wird für eine Farbbildröhre mit den Merkmalen des Patentanspruchs 1 und für ein Ablenksystem mit den Merkmalen des Patentanspruchs 6 erreicht.

Erfindungsgemäß wird eine Verbesserung der Konvergenz in den Bildschirmecken durch eine spezielle Anordnung zusätzlicher Korrekturmagnete erreicht. Dazu werden zusätzliche Korrekturmagnete außen an der Farbbildröhre angeordnet. Diese Korrekturmagnete befinden sich im wesentlichen in einer Ebene senkrecht zur Richtung der Elektronenstrahlen und sind in dieser Ebene so angeordnet, dass sie sich unter einem Winkel zwischen 20° und 70° zur Inline-Ebene befinden. Bei einer solchen Anordnung von Korrekturmagneten bewirkt jeder der Korrekturmagnete ein lokales Magnetfeld, das aufgrund seiner Position, seiner Dimensionierung und der in diesem Bereich bestehenden Abständen der drei Strahlen zueinander eine unterschiedlich starke Ablenkung der einzelnen Farbkomponenten zur Folge hat. Auf diese Weise können die Farbkomponenten unabhängig voneinander beeinflusst und die Gründurchbiegung in den Bildschirmecken wesentlich verbessert werden.

Gemäß einem weiteren Aspekt der Erfindung sind die Korrekturmagnete in dem Ablenksystem einer Farbbildröhre angeordnet. Dadurch kann ein einfacher Aufbau und eine einfache Herstellung der erfindungsgemäßen Farbbildröhre erreicht werden.

Gemäß einer vorteilhaften Ausführungsform der Erfindung sind die Korrekturmagnete jeweils symmetrisch unter einem Winkel von 60° zur Inline-Ebene angeordnet. Bei einer solchen Positionierung der Korrekturmagnete läßt sich in einfacher Weise eine besonderes effiziente Verbesserung der Konvergenzkorrektur erreichen.

Bevorzugte Ausgestaltungen der Erfindung sind in den Unteransprüchen angegeben.

Die Erfindung wird nun unter Bezugnahme auf die Zeichnungen näher erläutert.

Fig. 1 zeigt schematisch die vertikale Gründurchbiegung auf dem Leuchtschirm einer Farbbildröhre.

Fig. 2 zeigt schematisch den Aufbau einer Farbbildröhre.

Fig. 3 zeigt eine schematische Ansicht eines erfindungsgemäßen Ablenksystems für eine Farbbildröhre mit den unter bestimmten Winkelpositionen angeordneten Korrekturmagneten.

Fig. 4 zeigt den Aufbau des erfindungsgemäßen Ablenksystem aus Figur 3 in einer seitlichen Ansicht.

Fig. 5 zeigt in einer schematischen Darstellung die durch die Korrekturmagnete bewirkte unterschiedlich starke Ablenkung der Elektronenstrahlen eines Inline-Elektronenstrahlerzeugungssystems.

Fig. 6 zeigt eine schematische Ansicht eines Leuchtschirms einer erfindungsgemäßen Farbbildröhre mit der durch die Zusatzmagnete bewirkten Korrektur.

Fig. 7 zeigt eine schematische Darstellung eines Leuchtschirms einer erfindungsgemäßen Farbbildröhre mit optimaler Korrektur der Konvergenz.

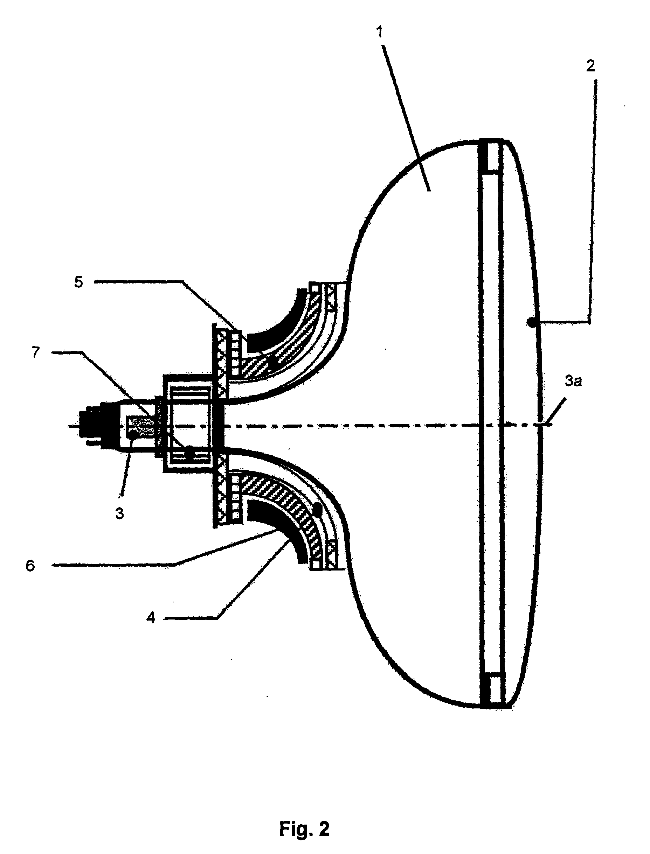

Fig. 2 zeigt eine Schnittansicht einer Farbbild-Elektronenstrahlröhre 1. Die Farbbildröhre ist auf der Innenseite der Schirmfläche 2 mit einer Leuchtschicht versehen und weist ein im Hals der Farbbildröhre angeordnetes Elektronenstrahlerzeugungssystem 3 auf. Bei dem Elektronenstrahlerzeugungssystem handelt es sich um ein Inline-Elektronenstrahlerzeugungssystem. Unter einem Inline-Elektronenstrahlerzeugungssystem versteht man ein Elektronenstrahlerzeugungssystem, das vorzugsweise drei in einer gemeinsamen Ebene 3a verlaufende Elektronenstrahlen erzeugt, die auf den Leuchtschirm 2 gerichtet sind. Außen am Glaskörper der Farbbildröhre ist ein Ablenksystem montiert. Das Ablenksystem umfasst ein Horizontal-Ablenkspulenpaar 4, ein Vertikal-Ablenkspulenpaar 5 und einen beide Spulen umschließenden Ferritkem 6. Ein solches Ablenksystem mit einem im wesentlichen trichterförmigen Aufbau bewirkt eine Ablenkung der vom Elektronenstrahlerzeugungssystem 3 erzeugten Elektronenstrahlen in X-Richtung und in Y-Richtung. Die Ablenkeinheit umfasst zusätzlich Korrekturmagnete und ggf. weichmagnetische Feldformer, so dass auf dem Leuchtschirm 2 ein selbstkonvergierendes Bild ohne NS-Rasterverzeichnung entsteht.

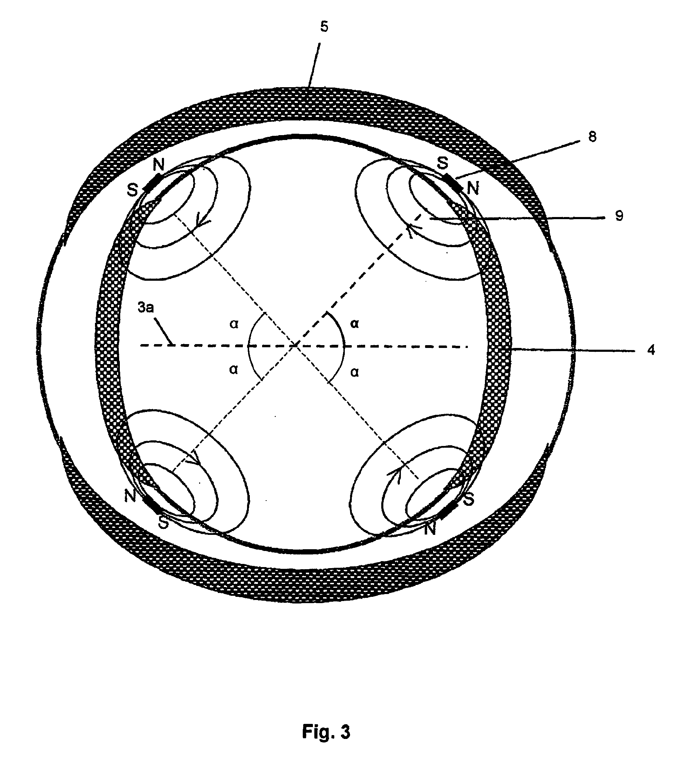

Fig. 3 zeigt eine schematische Ansicht des erfindungsgemäßen Ablenksystems in Richtung der Z-Achse der Farbbildröhre. Die vertikalen Ablenkspulen sind mit dem Bezugszeichen 5 bezeichnet, die horizontalen Ablenkspulen mit dem Bezugszeichen 4. Zusätzlich sind in dieser Ansicht vier rotationssymmetrisch angeordnete Korrekturmagnete 8 dargestellt. Vorzugsweise sind alle vier Korrekturmagnete unter einem Winkel α von in etwa 60° zur Inline-Ebene 3a angeordnet. Je nach Aufbau und Form der Farbbildröhre können die zusätzlichen Korrekturmagnete innerhalb eines Winkelbereichs von 20° bis 70° für den Winkel α positioniert werden, bevorzugt innerhalb eines Winkelbereichs zwischen 50° und 60°.

Die erfindungsgemäße Positionierung der Korrekturmagnete 8 bewirkt, dass die drei horizontal nebeneinander verlaufenden Elektronenstrahlen durch das von jeweils einem Korrekturmagnet 8 erzeugte Magnetfeld 9 unterschiedlich stark abgelenkt werden. Über die Polarität und Dimensionierung des Magnetfeldes läßt sich eine geeignete Verschiebung der Elektronenstrahlen zueinander für die Konvergenzkorrektur einstellen.

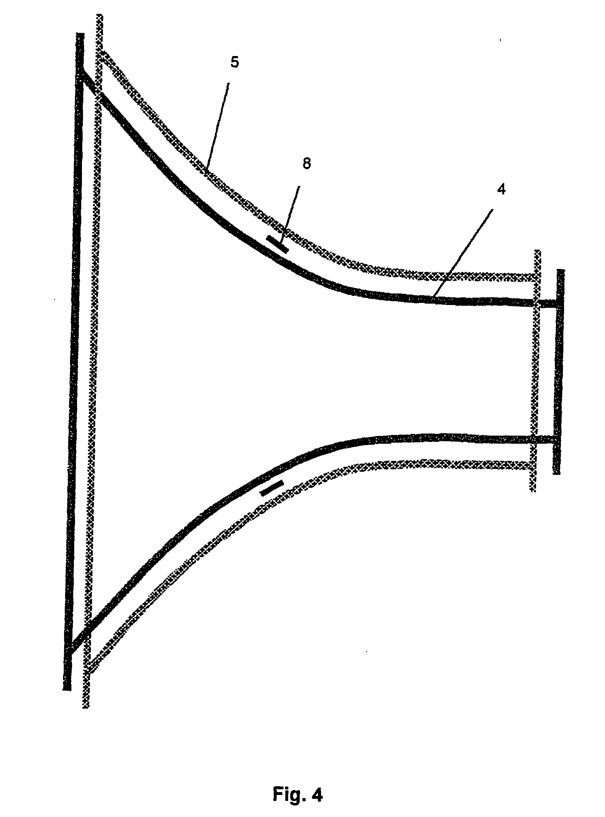

Bevorzugt werden die Korrekturmagnete 8 in Z-Richtung der Farbbildröhre in einer mittleren Ebene bezogen auf das Ablenksystem montiert. Eine solche Anordnung ist in Fig. 4 wiedergegeben. Dabei werden die Korrekturmagnete 8 bevorzugt auf den Horizontalspulen 4 des aus Horizontalspulen 4 und Vertikalspulen 5 bestehenden Ablenksystems vorgesehen. Durch eine Verschiebung der Ebene der Korrekturmagnete 8 in Z-Richtung der Farbbildröhre läßt sich der Einfluss der Magnetfelder 9 auf die Elektronenstrahlen variieren.

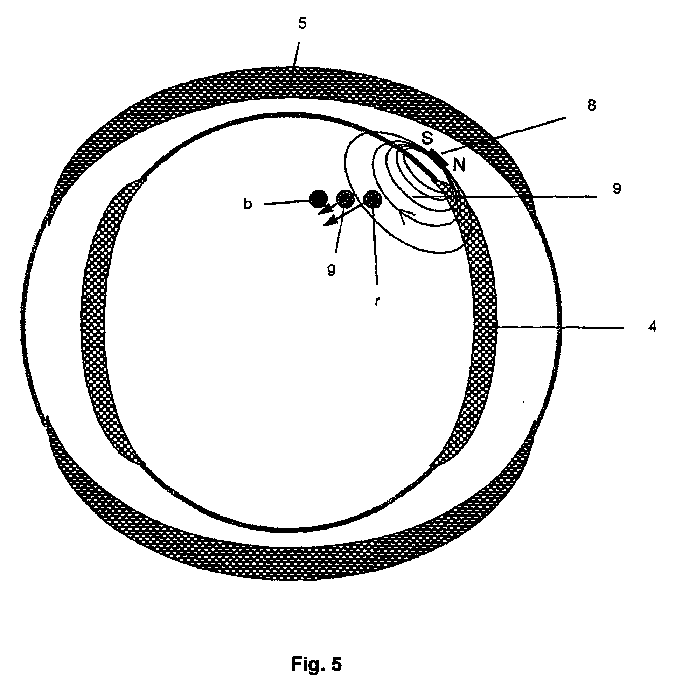

Fig. 5 zeigt eine weitere schematische Darstellung des Ablenksystems aus Fig. 3. Um die unterschiedliche Beeinflussung der Elektronenstrahlen eines Inline-Elektronenstrahlerzeugungssystems zu verdeutlichen, ist nur ein Korrekturmagnet 8 wiedergegeben. Die durch dessen Feldlinien 9 verlaufenden Elektronenstrahlen b, g und r werden durch den Korrekturmagneten unterschiedlich stark beeinflusst. In Fig. 5 ist zur erkennen, dass die Korrekturmagnete 8 auf der einen Seite des Bildschirms im wesentlichen eine Verschiebung der roten und grünen Farbkomponente g und r relativ zur blauen Farbkomponente b bewirken. Die Richtung und Stärke der Verschiebung ist in Fig. 5 durch von den Elektronenstrahlen g und r ausgehende Pfeile angedeutet. Auf der gegenüberliegenden Bildschirmseite findet eine entsprechende Verschiebung der blauen und grünen Farbkomponenten relativ zur roten Farbkomponente in Richtung der Bildschirmmitte statt (nicht dargestellt).

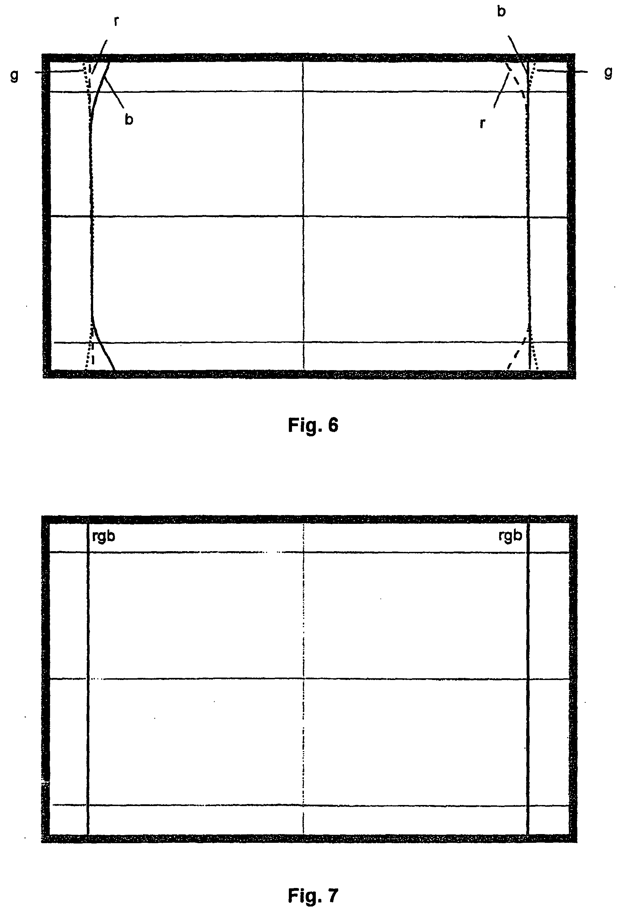

Mit Hilfe der Korrekturmagnete 8 lassen sich die einzelnen Elektronenstrahlen r, b, g so zueinander verschieben, dass in den Eckbereichen die in Fig. 1 dargestellte vertikale Gründurchbiegung in eine vertikale Durchbiegung eines der beiden seitlichen Elektronenstrahlen "transformiert" wird. Eine schematische Darstellung einer durch die Korrekturmagnete bewirkten Verschiebung der Farbkomponenten zueinander ist in Fig. 6 wiedergegeben.

Ein Konvergenzfehler, wie er in Fig. 6 wiedergegeben ist, läßt sich in einfacher Weise mit üblichen Korrekturverfahren beheben. Beispielsweise kann die Windungsverteilung der Horizontal- oder Vertikalspulen variiert werden und/oder können zusätzliche Geometriemagnete in anderen Ebenen des Ablenksystems angeordnet werden, so dass auch dieser "transformierte" Konvergenzfehler korrigiert werden kann.

In Fig. 7 ist ein entsprechend korrigierter Farbbildschirm mit einer erfindungsgemäßen Korrektur der ursprünglichen Gründurchbiegung (vgl. Fig. 1) wiedergegeben. Über die Position, Größe und Stärke der Korrekturmagnete 8 läßt sich der Grad der Änderung der Gründurchbiegung in weitem Bereich beeinflussen.

Die Erfindung betrifft somit eine Farbbildröhre und ein Ablenksystem für eine Farbbildröhre mit einem rechteckigen Leuchtschirm und einem Inline-Elektronenstrahlerzeugungssystem. Ein Inline-Elektronenstrahlerzeugungssystem erzeugt mehrere im wesentlichen in einer gemeinsamen Ebene verlaufende Elektronenstrahlen, die auf den Leuchtschirm gerichtet sind. Um eine vertikale Gründurchbiegung in den Ecken des Leuchtschirms zu korrigieren, werden auf der Farbbildröhre bzw. in dem Ablenksystem einer Farbbildröhre Korrekturmagnete angeordnet. Die Korrekturmagnete befinden sich im wesentlichen in einer Ebene senkrecht zur Richtung der Elektronenstrahlen. Innerhalb dieser Ebene sind die Korrekturmagnete unter einem Winkel zur gemeinsamen Ebene, in der die Elektronenstrahlen verlaufen, angeordnet, der zwischen 20° und 70° liegt.

Die vorliegende Erfindung ermöglicht damit eine Farbbildröhre, bei der eine herkömmliche vertikale Gründurchbiegung in den Randbereichen des Bildschirms ohne großen Zusatzaufwand korrigierbar ist und die trotz verbesserter Abbildungseigenschaften günstig herstellbar ist.

## Patentansprüche

1. Farbbildröhre mit einem rechteckigen Leuchtschirm (14) und einem Inline-Elektronenstrahlerzeugungssystem (13) zur Erzeugung von mehreren im wesentlichen in einer gemeinsamen Ebene (3a) verlaufenden Elektronenstrahlen, die auf den Leuchtschirm (14) gerichtet sind,
**gekennzeichnet durch**
außen an der Farbbildröhre montierte Korrekturmagnete (8), die im wesentlichen in einer Ebene senkrecht zur Richtung der Elektronenstrahlen und in dieser Ebene jeweils unter einem Winkel (α) zwischen 20° und 70° zur gemeinsamen Ebene (3a), in der die Elektronenstrahlen verlaufen, angeordnet sind.

2. Farbbildröhre nach Anspruch 1, **dadurch gekennzeichnet, dass** die Korrekturmagnete (8) im Bereich eines außen an der Farbbildröhre zur Ablenkung der Elektronenstrahlen montierten Ablenksystems (4, 5) angeordnet sind.

3. Farbbildröhre nach Anspruch 2, **dadurch gekennzeichnet, dass** das Ablenksystem eine Horizontalspule (4) und eine Vertikalspule (5) umfasst und die Korrekturmagnete auf der Horizontalspule (4) montiert sind.

4. Fabbildröhre nach einem der Ansprüche 1 bis 3, **dadurch gekennzeichnet, dass** die Korrekturmagnete (8) jeweils unter einem Winkel (α) zwischen 50° und 65° zur gemeinsamen Ebene (3a), in der die Elektronenstrahlen verlaufen, angeordnet sind.

5. Farbbildröhre nach einem der Ansprüche 1 bis 3, **dadurch gekennzeichnet, dass** die Korrekturmagnete (8) jeweils unter einem Winkel (α) von in etwa 60° zur gemeinsamen Ebene (3a), in der die Elektronenstrahlen verlaufen, angeordnet sind.

6. Ablenkeinheit für eine Farbbildröhre (2) mit einem rechteckigen Leuchtschirm (14) und einem Inline-Elektronenstrahlerzeugungssystem (13) zur Erzeugung von mehreren im wesentlichen in einer gemeinsamen Ebene (3a) verlaufenden Elektronenstrahlen, die auf den Leuchtschirm (14) der Farbbildröhre (2) gerichtet sind,
**gekennzeichnet durch**
Korrekturmagnete (8), die in dem Ablenksystem im wesentlichen in einer Ebene senkrecht zur Richtung der Elektronenstrahlen und in dieser Ebene jeweils unter einem Winkel (α) zwischen 20° und 70° zur gemeinsamen Ebene (3a), in der die Elektronenstrahlen verlaufen, angeordnet sind.

7. Ablenksystem nach Anspruch 6, **dadurch gekennzeichnet, dass** die Korrekturmagnete (8) jeweils unter einem Winkel (α) zwischen 50° und 65° zur gemeinsamen Ebene (3a), in der die Elektronenstrahlen verlaufen, angeordnet sind.

8. Ablenksystem nach Anspruch 6, **dadurch gekennzeichnet, dass** die Korrekturmagnete (8) jeweils unter einem Winkel (α) von in etwa 60° zur gemeinsamen Ebene (3a), in der die Elektronenstrahlen verlaufen, angeordnet sind.

## Geänderte Patentansprüche

### Geänderte Patentansprüche gemäss Regel 86(2) EPÜ.

**1.** Farbbildröhre mit einem rechteckigen Leuchtschirm (2), einem Inline-Elektronenstrahlerzeugungssystem (3) zur Erzeugung von mehreren im wesentlichen in einer gemeinsamen Ebene (3a) verlaufenden Elektronenstrahlen, die auf den Leuchtschirm (2) gerichtet sind, einer Ablenkeinheit (4, 5) zum Ablenken der Elektronenstrahlen in vertikaler und horizontaler Richtung, und außen an der Farbbildrohre montierten Korrekturmagneten (8), die im wesentlichen in einer Ebene senkrecht zur Richtung der Elektronenstrahlen und in dieser Ebene jeweils unter einem Winkel (α) zwischen 20° und 70° zur gemeinsamen Ebene (3a), in der die Elektronenstrahlen verlaufen, angeordnet sind,
**dadurch gekennzeichnet, dass**
sich die Ebene, in der die Korrekturmagnete (8) angeordnet sind, im mittleren Teilbereich der Ablenkeinheit (4, 5) bezogen auf die Richtung der Elektronenstrahlen befindet.

**2.** Eine Farbbildröhre nach Anspruch 1, **dadurch gekennzeichnet, dass** sich die Pole der Korrekturmagnete (8) im wesentlichen in der Ebene, in der die Korrekturmagnete (8) angeordnet sind, befinden.

**3.** Farbbildröhre nach Anspruch 1 oder 2, **dadurch gekennzeichnet, dass** die Korrekturmagnete (8) im Bereich der außen an der Farbbildröhre zur Ablenkung der Elektronenstrahlen montierten Ablenkeinheit (4, 5) angeordnet sind.

**4.** Farbbildröhre nach einem der Ansprüche 1 bis 3, **dadurch gekennzeichnet, dass** die Ablenkeinheit (4, 5) eine Horizontalspule (4) und eine Vertikalspule (5) umfasst und die Korrekturmagnete auf der Horizontalspule (4) montiert sind.

**5.** Farbbildröhre nach einem der Ansprüche 1 bis 4, **dadurch gekennzeichnet, dass** die Korrekturmagnete (8) jeweils unter einem Winkel (α) zwischen 50° und 65° zur gemeinsamen Ebene (3a), in der die Elektronenstrahlen verlaufen, angeordnet sind.

**6.** Farbbildröhre nach einem der Ansprüche 1 bis 4, **dadurch gekennzeichnet, dass** die Korrekturmagnete (8) jeweils unter einem Winkel (α) von in etwa 60° zur gemeinsamen Ebene (3a), in der die Elektronenstrahlen verlaufen, angeordnet sind.

**7.** Ablenkeinheit für eine Farbbildröhre (1) mit einem rechteckigen Leuchtschirm (2) und einem Inline-Elektronenstrahlerzeugungssystem (3) zur Erzeugung von mehreren im wesentlichen in einer gemeinsamen Ebene (3a) verlaufenden Elektronenstrahlen, die auf den Leuchtschirm (2) der Farbbildröhre (1) gerichtet sind, die Ablenkeinheit weist Korrekturmagnete (8) auf, die in der Ablenkeinheit im wesentlichen in einer Ebene senkrecht zur Richtung der Elektronenstrahlen und in dieser Ebene jeweils unter einem Winkel (α) zwischen 20° und 70° zur gemeinsamen Ebene (3a), in der die Elektronenstrahlen verlaufen, angeordnet sind,
**gekennzeichnet dadurch, dass**
sich die Ebene, in der die Korrekturmagnete (8) angeordnet sind, im mittleren Teilbereich der Ablenkeinheit bezogen auf die Richtung der Elektronenstrahlen befindet.

**8.** Eine Ablenkeinheit nach Anspruch 7, **dadurch gekennzeichnet, dass** sich die Pole der Korrekturmagnete (8) im Wesentlichen in der Ebene, in der die Korrekturmagnete (8) angeordnet sind, befinden.

**9.** Ablenkeinheit nach Anspruch 7 oder 8, **dadurch gekennzeichnet, dass** die Korrekturmagnete (8) jeweils unter einem Winkel (α) zwischen 50° und 65° zur gemeinsamen Ebene (3a), in der die Elektronenstrahlen verlaufen, angeordnet sind.

**10.** Ablenkeinheit nach Anspruch 7 oder 8, **dadurch gekennzeichnet, dass** die Korrekturmagnete (8) jeweils unter einem Winkel (α) von in etwa 60° zur gemeinsamen Ebene (3a), in der die Elektronenstrahlen verlaufen, angeordnet sind.
